# EUROPÄISCHE PATENTSCHRIFT

(11) **EP 2 141 069 B1**
(45) Veröffentlichungstag und Bekanntmachung des Hinweises auf die Patenterteilung: **30.11.2016**
(21) Anmeldenummer: 09008107.6
(22) Anmeldetag: 20.06.2009
(51) Int. Cl.: B62M 9/12

(54) **Mehrfach-Kettenzahnrad für ein Fahrrad**
Multiple-chain gear wheel for a bicycle
Roue dentée à chaîne multiple pour un vélo

(30) Priorität: 03.07.2008 DE 102008031162
(43) Veröffentlichungstag der Anmeldung: 06.01.2010
(73) Patentinhaber: SRAM Deutschland GmbH, 97404 Schweinfurt (DE)
(72) Erfinder: Braedt, Henrik, Dipl.-Ing., 97076 Würzburg (DE)

(56) Entgegenhaltungen:
- EP-A2- 0 047 927
- EP-A2- 1 489 338
- JP-A- 2 164 684
- US-A- 4 047 603
- US-A- 5 087 226
- US-A1- 2005 032 596

## Beschreibung

Die Erfindung betrifft ein Mehrfach-Kettenzahnrad mit unterschiedlich großen Zahnkränzen zur Aufnahme einer Kette und zur Übertragung einer von dieser eingeleiteten Umfangkraft auf eine Nabe eines Hinterrades eines Fahrrades mit der Möglichkeit, die Kette durch eine Schalteinrichtung von einem auf einen anderen Zahnkranz zu wechseln, wobei der Zahnkranz und seine Zähne Schalthilfen aufweisen, die sowohl den Gangwechsel erleichtern, als auch zur Aufrechterhaltung des Eingriffs der Kette in die Verzahnung des Zahnkranzes verstärkt beitragen.

Gangwechsel an Mehrfach-Kettenzahnrädern können mit Hilfe eines Schaltwerkes inzwischen problemlos und sicher erfolgen, wobei vorausgesetzt werden muss, dass der Fahrer bestimmte Regeln beachtet. So ist es beispielsweise geraten, bei bestimmten Positionen der Kette auf den Zahnkränzen nicht leer rückwärts zu treten oder mehrere Gangstufen nicht auf einmal mit hohem Drehmoment zu schalten. Außerdem sind beim Schalten ausreichend hohe Drehzahlen an den Pedalen erforderlich.

Um kontrolliertes Schalten auf kleinere Zahnkränze zu ermöglichen, muss die Kette so lange auf dem Zahnkranz geführt werden, bis eine vorgegebene Position erreicht ist. In dieser Position laufen die Rollen beim Absteigen in die Zahnlücken des kleineren Zahnkranzes ein, so dass die Kette nicht auf dessen Zähnen aufreiten kann. Daraus ergibt sich ein nahezu ruckfreier Schaltvorgang, der auch unter Last durchgeführt werden kann. Das Problem beim kontrollierten Schalten auf den nächst kleineren Zahnkranz ist es, die Kette am sofortigen Absteigen unter Umgehung der vorgesehenen Positionen zu hindern. Auch wenn die Kette an den vorgesehenen Positionen absteigt, ist es noch nicht gewährleistet, dass die Kette durch seitlichen Versatz mit den Laschen auf den Zähnen aufreitet, obwohl die Rollen in der richtigen Position zu den Zahnlücken liegen.

Um die Schaltgeschwindigkeit ohne Überschaltwege am Schalter mit gleichzeitig sanftem Übergang der Kette zu erreichen, wurde eine Vielzahl von Verbesserungen vorgeschlagen, wie beispielsweise in dem US-Patent Nr. 475021 vom 11.11.1937, wo am Zahnkranz in beide Drehrichtungen Schaltgassen in die Verzahnung eingearbeitet wurden, um der Kette an einer Stelle des Umfangs einen geräuscharmen Übergang zu schaffen.

Gemäß dem Europäischen Patent EP 642975 B1 werden eine Vielzahl von Modifikationen an den Zähnen des Zahnkranzes und am Zahnkranz selbst vorgenommen, um das Schalten der Kette sowohl zum kleineren wie auch zum größeren Zahnkranz, insbesondere unter Last zu erleichtern, wobei es für beide Schaltrichtungen mindestens eine Position für das Überwechseln der Kette gibt.

Den Stand der Technik nach dem Oberbegriff des Anspruchs 1 stellt hier die US5087226 dar.

Die genannten Vorschläge machen es Fahrern mit technischem Verständnis zwar einfacher, mit geringerer Fehlerhäufigkeit zu schalten, trotzdem wird einer internen Versuchsreihe zufolge mit einer Fehlerrate von 30 % zu rechnen sein. Schaltfehler aber können unter Last einen Kettenriss bewirken und zudem die Muskulatur des Fahrers einem kräftigen Ruck aussetzen, der zu Krämpfen während der Fahrt führen kann.

Die in dieser Erfindung vorgeschlagenen Lösungen konzentrieren sich auf spezielle Zahnkranzgeometrien und können so gezielt an die jeweilige Größe des fraglichen Zahnkranzes angepasst werden. Mehrere dieselbe Tendenz bewirkende Änderungen der Geometrie sind es, die zu einer optimalen Führung der Kette gegen die beim Schalten auftretenden Ablenkungskräfte führen:
- Die Zahnkranzbreite im Bereich des Fußkreises wird wesentlich erhöht, so dass sich die axiale Führung der Kette auf dem Zahnkranz im Wesentlichen durch einen Überstand des Teildurchmessers der Innenlaschen gegenüber dem Durchmesser der Rolle im Führungsbereich am Fußkreis des Zahnkranzes ergibt.
- Eine flache Führungsschräge verläuft am Zahn von einem Führungsbereich am Fußkreis ausgehend bis zum Bereich des obersten Anlagepunktes der Rolle an einer der Flanken des Zahnes, wodurch die Breite des Zahnes soweit nach oben hin reduziert wird, dass es nicht zum Festsetzen der Innenlaschen durch die hohe Zahnkranzbreite kommt. Beim Eintauchen der Rolle in jeweils einen Zahnlückengrund wird die Kette zum Zahnkranz ausgerichtet und zentriert sich, nachdem sie beim Schalten entweder von der Führungsschräge, oder von einer ersten Abweisfase abgewiesen wurde. Außenlaschen sind an der Führung der Kette nicht beteiligt. Es hat sich als zweckmäßig erwiesen, dass die Führungsschräge einen Winkel von 10° bis 20° zur Planfläche des Zahnkranzes aufweist. Bei kleineren Zahnkränzen wird der Winkel vorzugsweise in einem Bereich von 5° bis 15° liegen.
- Zur Zahnspitze hin folgt auf die Führungsschräge die deutlich stärker geneigte erste Abweisfase, die zum einen die Kette dann wieder abweist und in die Ausgangsposition auch dann zurück wirft, wenn starke Schaltkräfte die Kette trotz der vorbeschriebenen Führungsschräge soweit auslenken, dass sie unkontrolliert zum kleineren Zahnkranz hin abzusteigen droht. Zum anderen wirkt die erste Abweisfase auch als Einführschräge, wenn die Kette vom größeren auf den kleineren Zahnkranz kontrolliert absteigt und durch den dabei erzeugten Kettenbogen eine zu große Auslenkung bekommt. Hierbei wird die Kette wieder zurück gelenkt und verhindert, dass die Kette aufreitet. Die zweite Abweisfase dient auch dazu, die im Eingriff mit einem Zahnkranz befindliche Kette an der Zahnspitze nicht zum Eingriff gelangen zu lassen, sondern abzuweisen, um den ursprünglichen Eingriff der Kette beizubehalten.
- Auf die erste Abweisfase folgt eine zweite Abweisfase und bildet mit dieser eine First als oberste Erhebung des Zahnes. Die zweite Abweisfase ist kürzer und verläuft gegenüber der Planfläche des Zahnes steiler und weist daher vom First zu der zum kleineren Zahnkranz weisenden Planfläche des betreffenden Zahnkranzes einen Abstand von etwa einem Drittel der Zahnkranzbreite auf. Ein wesentliches Merkmal ist, dass die erste Abweisfase und die für das Schalten der Kette auf jeweils größere Zahnkränze notwendige zweite Abweisfase ohne vertikalen Übergangsbereich sind. Hierdurch ergibt sich eine optimale Ausnutzung der verfügbaren Zahnkranzbreite und auch eine verbesserte Schaltqualität bei unkontrollierten Schaltvorgängen über mehrere Zahnkränze hinweg.
- Die vorgeschlagene Zahnkranzgeometrie eignet sich vor allem zur Herstellung von gedrehten Rohlingen für gefräste Zahnkranz-Hohlkörper.

Kassettennaben gemäß dem Stand der Technik bestehen aus einer Vielzahl von Zahnkränzen, welche alle auf einem Mitnehmer einer Nabe des Hinterrades aufgereiht und mit dieser drehfest verbunden sind. Mehrfach-Kettenzahnräder der vorgeschlagenen Art sind jedoch nur aus zwei Teilen zusammen gesetzt, nämlich einem größten Zahnkranz und dem Zahnkranz-Hohlkörper, die drehfest miteinander und mit dem Mitnehmer verbunden sind. Zur Herstellung eines Rohlings für den Zahnkranz-Hohlkörper wird dieser mit allen inneren und äußeren Konturen und Zahnkränzen aus dem Vollen gedreht. Gefräst werden die Zahnkranz-Hohlkörper an den Zahnlücken und unterhalb der Zahnkränze, um eine hinsichtlich Gewicht und Festigkeit optimierte Kassettennabe zu erstellen. Weitere Gewichtserleichterung erhält man, wenn die Zahnkranzbreite unterhalb des Fußkreises verringert wird, was mit ringförmigen Ausnehmungen erreichbar ist. Es können sehr dünne Wandstärken erzielt werden, die eine ausreichende Festigkeit für den Zahnkranz-Hohlkörper gewährleisten, wenn man auf Fräsoperationen unterhalb der Zahnkränze verzichten will.

Alles in allem sind es gemäß dieser Erfindung die folgenden vier mit einander verbundenen Elemente, welche die Verbesserung der vorgeschlagenen Zahnkranzformen gegenüber dem Stand der Technik ausmachen:
- die Führungsschräge
- die erste Abweisfase
- die zweite Abweisfase und
- das geringe axiale Spiel der Kette auf den Zahnkränzen im Bereich ihrer Fußkreise.

Die Erfindung hat es sich zur Aufgabe gemacht, ein Mehrfach-Kettenzahnrad zu schaffen, dessen Zahnkränze eine geometrische Form aufweisen, die zu einer optimalen Führung der Kette gegen die beim Schalten auftretenden Ablenkungskräfte führen. Es sollen Schaltfehler auch dann vermieden werden, wenn die Kette nicht in den vorgesehenen Positionen auf- oder absteigt. Außerdem soll ein Optimum zwischen Gewicht und Festigkeit erreicht werden.

Die Lösung der Aufgabe ist in den kennzeichnenden Teil des Hauptanspruches beschrieben. Ausgestaltungen sind den jeweiligen Unteransprüchen zu entnehmen.

Anhand mehrerer Skizzen wird ein Mehrfach-Kettenzahnrad für eine Nabe am Hinterrad eines Fahrrades erläutert. Es zeigen:
- Fig. 1: eine Kette mit einer Rolle und Innenlaschen auf einem Zahnkranz im Eingriff mit einem Zahn, dessen zum größeren Zahnkranz weisende Planfläche eine Führungsschräge aufweist, anschließend daran eine erste Abweisfase und eine zweite Abweisfase im Teilschnitt;
- Fig. 2: ein Mehrfach-Kettenzahnrad, bestehend aus einem Zahnkranz-Hohlkörper und einem größten Zahnkranz auf einem Mitnehmer einer Nabe im Teilschnitt;
- Fig. 3: einen Ausschnitt aus dem Zahnkranz-Hohlkörper mit der Ausgestaltung einer Zahnspitze sowie mit Ausnehmungen im Teilschnitt;
- Fig.4: eine Darstellung eines ringförmigen Führungsbereichs der Innenlaschen am Zahnkranz entlang seines Fußkreises als Skizze.

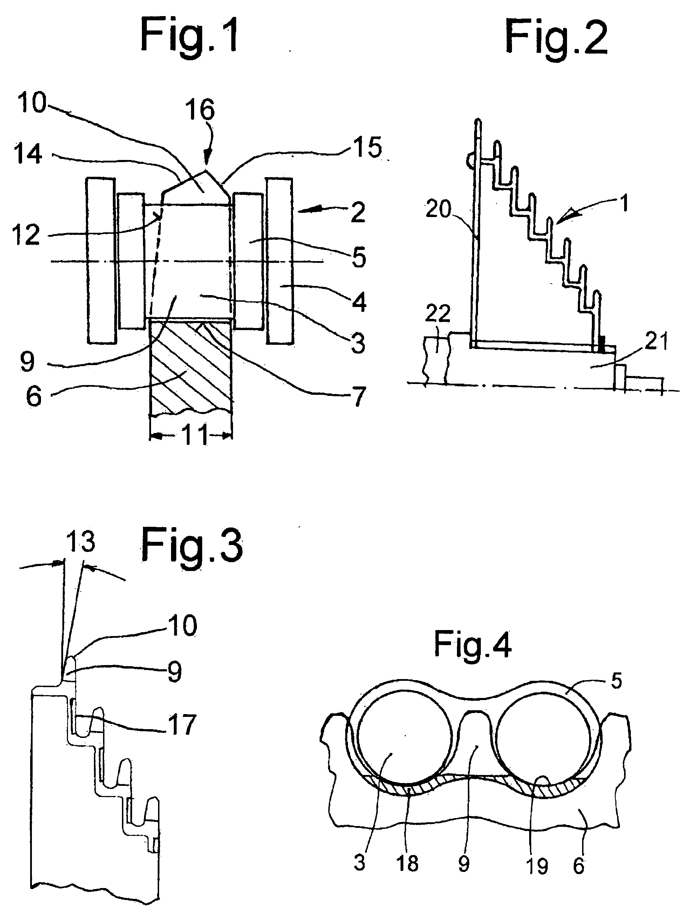

Gemäß der Fig. 1 wird im Teilschnitt ein Zahnkranz 6 eines Zahnkranz-Hohlkörpers 1 dargestellt, mit dem eine Kette 2 mit einer Rolle 3, einer Außenlasche 4 und einer Innenlasche 5 zusammen wirkt. Ferner ist ersichtlich, dass die Rolle 3 am Fußkreis 7 des Zahnkranzes 6 anliegt und die beiden Innenlaschen 5 einen Zahn 9 mit einer Zahnkranzbreite 11 mit einem geringen Spiel umschließen, wobei die Innenlaschen 5 zum Fußkreis 7 einen Überstand 8 bilden, da sie gegenüber der Rolle 3 einen größeren Teildurchmesser aufweisen. Ein Zahn 9 weist eine Führungsschräge 12 zum jeweils größeren Zahnkranz 6 weisend auf, die sich vom Fußkreis 7 bis zu einer Zahnspitze 10 erstreckt und einen Winkel 13 bildet, wie aus der Fig. 3 ersichtlich ist. Der Winkel 13 wird vorzugsweise mit einer Größe von 10° bis 20° Winkelgraden ausgeführt. Die Kontur der Zahnspitze 10 wird ferner durch eine erste Abweisfase 14 und durch eine zweite Abweisfase 15 gebildet, wobei die erste Abweisfase 14 mit der zweiten Abweisfase 15 eine Dachform mit einem First 16 als höchste Erhebung bilden. Die weniger geneigte erste Abweisfase 14 und die Führungsschräge 12 nehmen in der Projektion entlang den Planflächen zusammen etwa zwei Drittel der gesamten Zahnkranzbreite 11 ein, während die zweite gegenüber dem First 16 befindliche stärker geneigte zweite Abweisfase 15 nur etwa ein Drittel der Zahnkranzbreite 11 einnimmt.

Die Fig. 2 zeigt ein Mehrfach-Kettenzahnrad bestehend aus einem größten Zahnkranz 20 und dem Zahnkranz-Hohlkörper 1. Der größte Zahnkranz 20 und der Zahnkranz-Hohlkörper 1 sind miteinander und mit einem Mitnehmer 21 drehfest verbunden, wobei der Mitnehmer 21 das eingeleitete Drehmoment an eine Nabe 22 des Fahrrades weiterleitet.

Aus der Fig. 3 geht ferner hervor, dass die nach radial innen weisende scheibenförmige Verlängerung der Zahnkränze 6 eine beim Drehen eingearbeitete Ausnehmung 17 aufweist, die so tief ist, dass das verbleibende scheibenförmige Material etwa die Hälfte der Zahnkranzbreite 11 ausmacht und eine gerade ausreichende Festigkeit für die Bearbeitung sowie für die Übertragung der von der Kette 2 eingeleiteten Drehmomente bringt. Durch diese Ausnehmungen 17 werden geringe Wandstärken im Innern des Zahnkranz-Hohlkörpers 1 erzielt mit dem Vorteil, dass dort zur Gewichtserleichterung keine weiteren Fräsoperationen vorgenommen werden müssen. Da das Rohteil des Zahnkranz-Hohlkörpers 1 aus dem Vollen hauptsächlich durch Drehoperationen entsteht, wird die erfindungsgemäße Kontur der Zahnkränze 6 bei diesem Arbeitsgang fertig bearbeitet. Zu dieser Kontur zählen die Führungsschräge 12, die erste Abweisfase 14, die zweite Abweisfase 15, die zum kleineren Zahnkranz 6 weisende Planfläche und ferner auch die Ausnehmungen 17. Diese Ausnehmungen 17 haben den Vorteil, dass an den Zähnen 9 Fräsoperationen vorgenommen werden können, ohne auf die filigrane Struktur des Zahnkranz-Hohlkörpers 1 zu verzichten.

Schließlich zeigt die Fig. 4 einen Teilbereich des Zahnkranzes 6 mit drei Zähnen 9, wie zwei Rollen 3 mit einer Innenlasche 5 sich in einen Zahnlückengrund 19 einfügen und hierdurch einen Führungsbereich 18 erzeugen, der sich im Bereich des Fußkreises 7 mit einer Breite um den Zahnlückengrund 19 bildet, die dem Überstand 8, nämlich dem Unterschied zwischen dem Durchmesser der Rolle 3 und dem Teildurchmesser der Innenlasche 5, entspricht. In diesem Führungsbereich 18 ist das Spiel zwischen der Zahnkranzbreite 11 und dem durch die Rolle 3 bestimmten Abstand der Innenlaschen 5 am kleinsten.

### Bezugszeichenliste

- 1.: Zahnkranz-Hohlkörper
- 2.: Kette
- 3.: Rolle
- 4.: Außenlasche
- 5.: Innenlasche
- 6.: Zahnkranz
- 7.: Fußkreis
- 8.: Überstand
- 9.: Zahn
- 10.: Zahnspitze
- 11.: Zahnkranzbreite
- 12.: Führungsschräge
- 13.: Winkel
- 14.: erste Abweisfase
- 15.: zweite Abweisfase
- 16.: First
- 17.: Ausnehmung
- 18.: Führungsbereich
- 19.: Zahnlückengrund
- 20.: größter Zahnkranz
- 21.: Mitnehmer
- 22.: Nabe

## Patentansprüche

1. Einrichtung aus Kette und Mehrfach-Kettenzahnrad mit unterschiedlich großen Zahnkränzen zur Aufnahme der Kette (2) und zur Übertragung einer von dieser eingeleiteten Umfangkraft auf eine Nabe eines Hinterrades eines Fahrrades mit der Möglichkeit, die Kette (2) durch eine Schalteinrichtung von einem auf einen anderen Zahnkranz (6) zu wechseln, wobei der Zahnkranz (6) und seine Zähne Schalthilfen aufweisen, die sowohl den Gangwechsel erleichtern, als auch zur Aufrechterhaltung des Eingriffs der Kette (2) in die Verzahnung des Zahnkranzes verstärkt beitragen,
wobei der Zahnkranz (6) zur Führung der Kette (2) im Bereich seines Fußkreises (7) eine Zahnkranzbreite (11) aufweist, die unwesentlich kleiner ist, als der von der Rolle (3) der Kette (2) bestimmte Abstand der Innenlaschen (5) voneinander, wobei das sich hieraus ergebende geringe Spiel der Kette (2) am Zahn (9) auf einen Führungsbereich (18) eines Zahnlückengrundes (19) bezieht. **dadurch gekennzeichnet,**
**dass** die Zähne (9) an der dem größeren Zahnkranz (6) zugewandten Seite eine flache Führungsschräge (12) aufweisen, die in Richtung von der Zahnspitze (10) zum Fußkreis (7) verläuft, wo der Zahnkranz (6) seine volle Zahnkranzbreite (11) erreicht und wo die Kette (2) durch den Überstand (8) der Innenlaschen (5) gegenüber der Rolle (3) einen Führungsbereich (18) bildet,
wobei eine Zahnspitze (10) eine auf eine Führungsschräge (12) in Richtung von der Zahnspitze (10) zum Fußkreis (7) folgende erste Abweisfase (14) aufweist, die mit einer zum jeweils kleineren Zahnkranz (6) weisenden zweiten Abweisfase (15) eine Dachform mit einem First (16) an der Zahnspitze (10) bildet.

2. Einrichtung aus Kette und Mehrfach-Kettenzahnrad nach Anspruch 1,
**dadurch gekennzeichnet,**
**dass** sich die axiale Führung der Kette (2) auf dem Zahnkranz (6) im Wesentlichen durch den Überstand (8) der Innenlaschen (5) gegenüber der Rolle (3) im Führungsbereich (18) am Fußkreis (7) des Zahnkranzes (6) ergibt.

3. Einrichtung aus Kette und Mehrfach-Kettenzahnrad nach Anspruch 1,
**dadurch gekennzeichnet,**
**dass** die Führungsschräge (12) einen Winkel (13) zur Planfläche des Zahnkranzes (6) aufweist, der innerhalb eines Bereiches von 10° bis 20° liegt.

4. Einrichtung aus Kette und Mehrfach-Kettenzahnrad nach Anspruch 1 oder 3,
**dadurch gekennzeichnet,**
**dass** die Führungsschräge (12) bei kleinen Zahnkränzen (6) einen Winkel (13) zur Planfläche des Zahnkranzes (6) aufweist, der innerhalb eines Bereiches von 5° bis 15° liegt.

5. Einrichtung aus Kette und Mehrfach-Kettenzahnrad nach einem der Ansprüche 1, 3 oder 4,
**dadurch gekennzeichnet,**
**dass** die Führungsschräge (12) durch eine Drehoperation bereits am Rohling des Zahnkranz-Hohlkörpers (1) angebracht wird.

6. Einrichtung aus Kette und Mehrfach-Kettenzahnrad nach Anspruch 1,
**dadurch gekennzeichnet,**
**dass** die erste Abweisfase (14) und die zweite Abweisfase (15) durch eine Drehoperation bereits am Rohling des Zahnkranz-Hohlkörpers (1) angebracht werden.

7. Einrichtung aus Kette und Mehrfach-Kettenzahnrad nach Anspruch 1 oder 6,
**dadurch gekennzeichnet,**
**dass** der First (16) von der zum kleineren Zahnkranz (6) weisenden Planfläche des betreffenden Zahnkranzes (6) einen Abstand von etwa einem Drittel der Zahnkranzbreite (11) aufweist.

8. Einrichtung aus Kette und Mehrfach-Kettenzahnrad nach einem der Ansprüche 1, 6 oder 7,
**dadurch gekennzeichnet,**
**dass** die zweite Abweisfase (15) bezogen auf den First (16) eine stärkere Neigung aufweist, als die erste Abweisfase (14).

9. Einrichtung aus Kette und Mehrfach-Kettenzahnrad nach einem der Ansprüche 1, 6 bis 8,
**dadurch gekennzeichnet,**
**dass** an den Planflächen der Zahnkränze (6) ringförmige Ausnehmungen (17) angeordnet sind.

10. Einrichtung aus Kette und Mehrfach-Kettenzahnrad nach einem der Ansprüche 1, 6 bis 10,
**dadurch gekennzeichnet,**
**dass** die Ausnehmungen (17) durch eine Drehoperation bereits am Rohling des Zahnkranz-Hohlkörpers (1) angebracht werden.

## Claims

1. Device comprising a chain and a multiple chain sprocket with toothed rims of different size for receiving the chain and for transmitting a circumferential force which is introduced by the latter to a hub of a rear wheel of a bicycle with the option of changing the chain from one to another toothed rim (6) by way of a shifting device, the toothed rim (6) and its teeth having shifting aids which both facilitate the gear change and contribute in a pronounced manner to maintaining the engagement of the chain (2) in the toothing system of the toothed rim, the toothed rim (6) having a toothed rim width (11) in the region of its root circle (7) for guiding the chain (2), which toothed rim width (11) is insignificantly smaller than the spacing of the inner link plates (5) from one another which is defined by the roller (3) of the chain (2), the small play which results herefrom of the chain (2) on the tooth (9) relating to a guide region (18) of a tooth gap bottom (19), **characterized in that**, on the side which faces the larger toothed rim (6), the teeth (9) have a flat guide bevel (12) which runs in the direction from the tooth tip (10) to the root circle (7), where the toothed rim (6) reaches its full toothed rim width (11) and where the chain (2) forms a guide region (18) by way of the projecting length (8) of the inner link plates (5) with respect to the roller (3), a toothed tip (10) having a first deflecting chamfer (14) which follows a guide bevel (12) in the direction from the toothed tip (10) to the root circle (7) and forms a roof shape with a ridge (16) at the toothed tip (10) with a second deflecting chamfer (15) which points towards the respectively smaller toothed rim (6).

2. Device comprising a chain and a multiple chain sprocket according to Claim 1, **characterized in that** the axial guidance of the chain (2) on the toothed rim (6) results substantially by way of the projecting length (8) of the inner link plates (5) with respect to the roller (3) in the guide region (18) at the root circle (7) of the toothed rim (6).

3. Device comprising a chain and a multiple chain sprocket according to Claim 1, **characterized in that** the guide bevel (12) has an angle (13) with respect to the flat surface of the toothed rim (6), which angle (13) lies within a range from 10° to 20°.

4. Device comprising a chain and a multiple chain sprocket according to Claim 1 or 3, **characterized in that**, in the case of small toothed rims (6), the guide bevel (12) has an angle (13) with respect to the flat surface of the toothed rim (6), which angle (13) lies within a range from 5° to 15°.

5. Device comprising a chain and a multiple chain sprocket according to one of Claims 1, 3 or 4, **characterized in that** the guide bevel (12) is already made on the blank of the toothed rim hollow body (1) by way of a turning operation.

6. Device comprising a chain and a multiple chain sprocket according to Claim 1, **characterized in that** the first deflecting chamfer (14) and the second deflecting chamfer (15) are already made on the blank of the toothed rim hollow body (1) by way of a turning operation.

7. Device comprising a chain and a multiple chain sprocket according to Claim 1 or 6, **characterized in that** the ridge (16) is at a spacing of approximately one third of the toothed rim width (11) from the flat surface of the relevant toothed rim (6) which points towards the smaller toothed rim (6).

8. Device comprising a chain and a multiple chain sprocket according to one of Claims 1, 6 or 7, **characterized in that**, in relation to the ridge (16), the second deflecting chamfer (15) has a greater inclination than the first deflecting chamfer (14).

9. Device comprising a chain and a multiple chain sprocket according to one of Claims 1 or 6 to 8, **characterized in that** annular recesses (17) are arranged on the flat surfaces of the toothed rims (6).

10. Device comprising a chain and a multiple chain sprocket according to one of Claims 1, 6 to 10, **characterized in that** the recesses (17) are already made on the blank of the toothed rim hollow body (1) by way of a turning operation.

## Revendications

1. Dispositif constitué d'une chaîne et d'un pignon multiple comprenant des couronnes dentées de tailles différentes pour recevoir la chaîne (2) et pour transmettre une force périphérique introduite par celle-ci à un moyeu d'une roue arrière d'une bicyclette avec possibilité de faire passer la chaîne (2), par un dispositif de commutation, d'une couronne dentée à une autre (6), la couronne dentée (6) et ses dents présentant des auxiliaires de commutation qui facilitent à la fois le changement de vitesses et contribuent de manière accrue à maintenir l'engagement de la chaîne (2) dans la denture de la couronne dentée,
la couronne dentée (6), pour le guidage de la chaîne (2), présentant dans la région de son cercle de pied (7) une largeur de couronne dentée (11) qui est à peine inférieure à la distance, déterminée par le rouleau (3) de la chaîne (2), des flasques intérieurs (5) les uns des autres, le faible jeu de la chaîne (2) en résultant au niveau de la dent (9) se rapportant à une région de guidage (18) d'une base d'un espace entre les dents (19),
**caractérisé en ce que**
les dents (9) présentent, au niveau du côté tourné vers la plus grande couronne dentée (6), un biseau de guidage plat (12) qui s'étend dans la direction de la pointe de dent (10) vers le cercle de pied (7), là où la couronne dentée (6) atteint sa largeur de couronne dentée maximale (11) et là où la chaîne (2) forme une région de guidage (18) par le dépassement (8) des flasques intérieurs (5) par rapport au rouleau (3), une pointe de dent (10) présentant un premier biseau de déflection (14) suivant un biseau de guidage (12) dans la direction de la pointe de dent (10) vers le cercle de pied (7), lequel forme avec un deuxième biseau de déflection (15) tourné vers la plus petite couronne dentée respective (6), une forme en toit avec un faîte (16) au niveau de la pointe de dent (10).

2. Dispositif constitué d'une chaîne et d'un pignon multiple selon la revendication 1,
**caractérisé en ce que**
le guidage axial de la chaîne (2) sur la couronne dentée (6) résulte essentiellement du dépassement (8) des flasques intérieurs (5) par rapport au rouleau (3) dans la région de guidage (18) au niveau du cercle de pied (7) de la couronne dentée (6).

3. Dispositif constitué d'une chaîne et d'un pignon multiple selon la revendication 1,
**caractérisé en ce que**
le biseau de guidage (12) présente un angle (13) par rapport à la surface plane de la couronne dentée (6) qui est situé à l'intérieur d'une plage de 10° à 20°.

4. Dispositif constitué d'une chaîne et d'un pignon multiple selon la revendication 1 ou 3,
**caractérisé en ce que**
le biseau de guidage (12), dans le cas des petites couronnes dentées (6), présente un angle (13) par rapport à la surface plane de la couronne dentée (6) qui est situé à l'intérieur d'une plage de 5° à 15°.

5. Dispositif constitué d'une chaîne et d'un pignon multiple selon l'une quelconque des revendications 1, 3 ou 4,
**caractérisé en ce que**
le biseau de guidage (12) est créé par une opération de tournage déjà au niveau de la pièce brute du corps creux de couronne dentée (1).

6. Dispositif constitué d'une chaîne et d'un pignon multiple selon la revendication 1,
**caractérisé en ce que**
le premier biseau de déflection (14) et le deuxième biseau de déflection (15) sont créés par une opération de tournage déjà au niveau de la pièce brute du corps creux de couronne dentée (1).

7. Dispositif constitué d'une chaîne et d'un pignon multiple selon la revendication 1 ou 6,
**caractérisé en ce que**
le faîte (16) de la surface plane de la couronne dentée concernée (6), tournée vers la plus petite couronne dentée (6), présente une distance d'environ un tiers de la largeur de la couronne dentée (11).

8. Dispositif constitué d'une chaîne et d'un pignon multiple selon l'une quelconque des revendications 1, 6 ou 7,
**caractérisé en ce que**
le deuxième biseau de déflection (15) présente par rapport au faîte (16) une plus forte inclinaison que le premier biseau de déflection (14).

9. Dispositif constitué d'une chaîne et d'un pignon multiple selon l'une quelconque des revendications 1, 6 à 8,
**caractérisé en ce que** des évidements de forme annulaire (17) sont disposés au niveau des surfaces planes des couronnes dentées (6).

10. Dispositif constitué d'une chaîne et d'un pignon multiple selon l'une quelconque des revendications 1, 6 à 10,
**caractérisé en ce que**
les évidements (17) sont créés par une opération de tournage déjà au niveau de la pièce brute du corps creux de couronne dentée (1).
